# EUROPEAN PATENT SPECIFICATION

(11) **EP 2 939 918 B1**
(45) Date of publication and mention of the grant of the patent: **22.11.2017**
(21) Application number: 14754319.3
(22) Date of filing: 20.02.2014
(51) Int. Cl.: B63H 21/38, B63B 11/04, B63B 25/16, B63H 21/12, F17C 7/04, F02M 21/02, F02M 21/06, B63J 99/00

(54) **NATURAL GAS FUEL EVAPORATOR, NATURAL GAS FUEL SUPPLY DEVICE, AND METHOD FOR SUPPLYING NATURAL GAS FUEL TO SHIPS AND MOTORS**
ERDGASBRENNSTOFFVERDAMPFER, ERDGASBRENNSTOFFZUFUHRVORRICHTUNG UND VERFAHREN ZUM ZUFÜHREN VON ERDGASBRENNSTOFF FÜR SCHIFFE UND MOTOREN
ÉVAPORATEUR DE CARBURANT GAZ NATUREL, DISPOSITIF D'ALIMENTATION EN CARBURANT GAZ NATUREL ET PROCÉDÉ D'ALIMENTATION DE NAVIRES ET DE MOTEURS EN CARBURANT GAZ NATUREL

(30) Priority: 22.02.2013 JP 2013033580
(43) Date of publication of application: 04.11.2015
(73) Proprietor: Mitsubishi Heavy Industries, Ltd., Tokyo 108-8215 (JP)
(72) Inventor: OKA, Masaru, Tokyo 108-8215 (JP)
(74) Representative: Henkel, Breuer & Partner
(86) International application number: PCT/JP2014/054072
(87) International publication number: WO 2014/129558

(56) References cited:
- WO-A1-2005/058684
- WO-A1-2008/000898
- WO-A1-2009/063127
- WO-A1-2011/078688
- WO-A1-2012/089891
- DE-A1-102008 061 192
- JP-A- H06 336 193
- JP-A- 2007 516 398
- JP-A- 2010 025 152
- JP-A- 2013 014 149
- JP-A- 2013 500 192
- JP-B2- 4 295 293

## Description

### Technical Field

The present invention relates to a natural gas fuel supply device for natural gas fuel which is fuel for motors, and a method for supplying natural gas fuel to ships and motors.

### Background Art

In equipment in which liquefied natural gas (LNG) or liquefied petroleum gas (LPG) as fuel is burned by a motor such as a boiler or an engine, natural gas fuel such as LNG or LPG stored in a tank is gasified, the gas is compressed using a compressor, and the compressed gas is discharged into the motor.

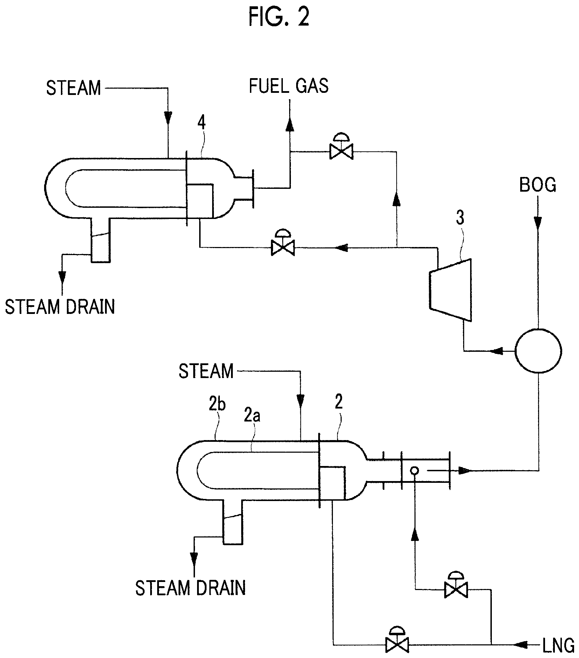

In order to gasify the natural gas fuel stored in the tank for use, a method of using boil-off gas obtained by gasifying natural gas fuel in a tank through heat input from outside may be used. However, with this method, an amount of gas required for the motor side cannot be supplied in some cases. Therefore, as shown in Fig. 2, natural gas fuel (LNG) is evaporated by extracting a liquid phase thereof from a tank and heating the liquid phase using an evaporator (vaporizer) 2 (for example, refer to JP 4295293B).

Examples of this evaporator 2 include a shell-and-tube type. In the shell-and-tube type evaporator 2, natural gas fuel in the liquid state is discharged into a tube 2a, and steam is discharged into a gap between an inner peripheral surface of a shell 2b and an outer peripheral surface of a tube 2a. The natural gas fuel is heated and gasified by heat exchange with the steam through the tube 2a. After heating, the gas of the natural gas fuel is mixed with boil-off gas (BOG) discharged from a tank, and the mixed gas is discharged into a gas compressor 3. The discharged gas is compressed by the compressor 3, is heated by a heating unit (heater) 4, and is discharged into a motor as fuel gas.

DE 102008061192 A1 discloses a natural gas fuel supply device on which the preamble portion of claim 1 is based. The fuel supply device has a gas temperature adjusting device in the form of a closed heat exchanger that is to bring the compressed mixture of natural boil-off gas and forced boil-off gas to a desired temperature level.

WO 2005/058684 A1 teaches to mix, in a natural gas fuel supply device, gas fuel pressurized by a compressor at a location in a gas main supply line to a motor with gas from another reservoir via a second section in order to supplement insufficient amounts of gas in situations of high consumption demand.

### Summary of Invention

### Technical Problem

However, in the evaporator 2, the natural gas fuel in the liquid state is heated to be gasified in the tube 2a, and thus flows in the gas-liquid two-phase state. In addition, in the outside of the tube 2a, the steam is cooled through heat exchange with the natural gas fuel and thus is also in the gas-liquid two-phase state.

In the flow of the gas-liquid two-phase state, although derived from the same material (natural gas fuel or steam), gas and liquid are different from each other in heat-transfer coefficient, specific gravity, and specific heat. Therefore, the design of the evaporator 2 is more complex than that of a single-phase evaporator. As a result, the equipment cost increases.

In addition, in such a natural gas fuel, for example, in LNG, heavy components such as ethane, propane, and butane are present together with methane as a major component. Here, the boiling point of methane alone at the atmospheric pressure is -161°C; whereas, for example, the boiling point of propane alone is -42°C.

When only methane is evaporated from LNG stored in a tank at a temperature of the boiling point of propane or lower to be used as fuel for a motor, heavy components accumulate over time, which increases the heavy component concentration in the tank.

Therefore, in the evaporator 2, for example, natural gas fuel is heated (superheated) to, for example, -40°C, and not only methane but also ethane and propane are gasified and discharged as fuel.

However, gas, which is discharged from the evaporator 2 by heating natural gas fuel at the boiling point of propane or higher to gasify ethane and propane, naturally has a higher temperature than that of a case where natural gas fuel is heated at the boiling point of propane or lower. As the gas temperature increases, the compression efficiency in the compressor 3 decreases. Accordingly, in order to compress the gas, which is heated to the boiling point of propane or higher, in the compressor 3, it is necessary that the size of the compressor 3 be increased. Therefore, there is a problem in that the equipment cost is increased.

The present invention has been made in consideration of the above-described circumstances, and an object thereof is to provide a natural gas fuel supply device, and a method for supplying natural gas fuel to ships and motors, in which the equipment cost can be suppressed.

### Solution to Problem

In order to solve the above-described problems, a natural gas fuel supply device according to the present invention has the features of claim 1, and a method for supplying natural gas fuel to ships and motors has the features of claim 7.

According to the present invention, there is provided a natural gas fuel supply device with a natural gas fuel evaporator including: a holding tank in which natural gas fuel supplied from outside is held in a saturated liquid state; a heating unit that heats the natural gas fuel extracted from the holding tank; a nozzle that discharges the natural gas fuel heated by the heating unit into the holding tank; a fuel supply line that is connected to the holding tank to communicate with an external fuel supply target and into which the natural gas fuel in a gas state is discharged from the holding tank; and a flow rate adjusting valve that is provided in the fuel supply line.

According to this natural gas fuel evaporator, the natural gas (liquid) extracted from the holding tank is heated by the heating unit, and the heated natural gas is discharged from the nozzle into the holding tank. As a result, the natural gas (liquid) is held in the holding tank in the saturated liquid state. When the flow rate adjusting valve is opened in this state, the internal pressure of the holding tank is reduced. As a result, the natural gas (liquid) in the holding tank is evaporated and gasified, and the gas is discharged through the fuel supply line. In this configuration, the heating unit only heats the natural gas (liquid) until the natural gas reaches the saturated liquid state. Therefore, the natural gas may be in a single-phase (liquid) state, not in a gas-liquid two-phase state. A heating medium for heating the natural gas (liquid) may also be in a single-phase (liquid or gas) state. Accordingly, the structure of a heat exchanger can be made simple, and the design thereof is also easy.

According to the present invention, the natural gas fuel supply device includes a compressor that compresses the natural gas fuel in the gas state discharged from the holding tank through the fuel supply line.

The natural gas fuel supply device further includes a gas temperature adjusting unit that adjusts a temperature of the natural gas fuel by mixing the natural gas fuel compressed by the compressor with the natural gas fuel in the liquid state extracted from the holding tank.

In this configuration, the natural gas in the liquid state is extracted from the holding tank to be used. As a result, heavy components of the natural gas fuel in the holding tank can be consumed, and the accumulation of the heavy components in the holding tank can be avoided.

Accordingly, in the heating unit, in order to consume the heavy components, it is not necessary to heat the natural gas fuel to the boiling points of the heavy components or higher, and thus the temperature of gas discharged through the fuel supply line can be decreased. As a result, it is also not necessary to increase the size of the compressor and the like, and thus the equipment cost can be reduced.

In addition, the natural gas fuel supply device according to the present invention may further include: a pressure sensor that detects an internal pressure of the holding tank; and a gas flow rate adjusting unit that adjusts a flow rate of the natural gas (liquid) supplied to the heating unit based on detection data of the pressure sensor such that the internal pressure of the holding tank is a saturated pressure of the natural gas fuel.

As a result, the flow rate of the natural gas fuel to the heating unit can be automatically adjusted, and the natural gas (liquid) in the holding tank can be maintained at a saturated pressure.

As the gas flow rate adjusting unit, a branch pipe is provided so as to bypass the heating unit and return to the holding tank, a flow rate adjusting valve is provided to the branch pipe, and the opening degree thereof is adjusted. As a result, the flow rate of the natural gas (liquid) supplied to the heating unit can be adjusted.

The natural gas fuel supply device according to the present invention may further include: a level sensor that detects a liquid level of the natural gas (liquid) in the holding tank; and a fuel level adjusting unit that adjusts an amount of the natural gas (liquid) supplied from the fuel tank to the holding tank based on the detection data of the level sensor such that the liquid level of the natural gas (liquid) in the holding tank is maintained to be constant.

As a result, the liquid level of the natural gas (liquid) in the holding tank can be maintained to be constant.

According to the present invention, there is provided a ship including: the above-described natural gas fuel supply device; and a motor to which the natural gas (gas) compressed by the compressor is supplied as fuel through the fuel supply line.

Further, when a turbine or an engine is included, the present invention is also applicable to, for example, power generation facilities and vehicles in addition to ships.

According to the present invention, there is provided a method for supplying natural gas fuel to motors, the method including: a step of extracting natural gas (liquid) from a holding tank in which the natural gas (liquid) supplied from outside is held in a saturated liquid state, heating the natural gas (liquid), and discharging the heated natural gas (liquid) into the holding tank; a step of evaporating the natural gas (liquid) in the liquid state held in the holding tank by opening a flow rate adjusting valve, which is provided in a fuel supply line, to reduce an internal pressure of the holding tank, the fuel supply line being connected to the holding tank to communicate with an external fuel supply target; a step of discharging the evaporated natural gas (gas) to a compressor through the fuel supply line and compressing the natural gas (gas) using the compressor; and a step of supplying the compressed natural gas (gas) to a motor.

### Advantageous Effects of Invention

According to the present invention, the structure of a heat exchanger can be made simple, and the design thereof is also easy. As a result, the equipment cost can be reduced.

In addition, the natural gas (liquid) in the liquid state is extracted from the holding tank to be used for adjusting the temperature of the natural gas (liquid) compressed by the compressor. As a result, heavy components of the natural gas (liquid) in the holding tank can be consumed, and the accumulation of the heavy components in the holding tank can be avoided. Accordingly, it is also not necessary to increase the size of the compressor and the like. From this point of view, the equipment cost can also be reduced.

### Brief Description of Drawings

Fig. 1 is a diagram showing configurations of a natural gas fuel evaporator, a natural gas fuel supply device, and a method for supplying natural gas fuel to ships and motors.
Fig. 2 is a diagram showing configurations of a natural gas fuel evaporator and a natural gas fuel supply device in the related art.

### Description of Embodiments

Hereinafter, a natural gas fuel evaporator, a natural gas fuel supply device, and a method for supplying natural gas fuel to ships and motors according to an embodiment of the present invention will be described with reference to the drawings.

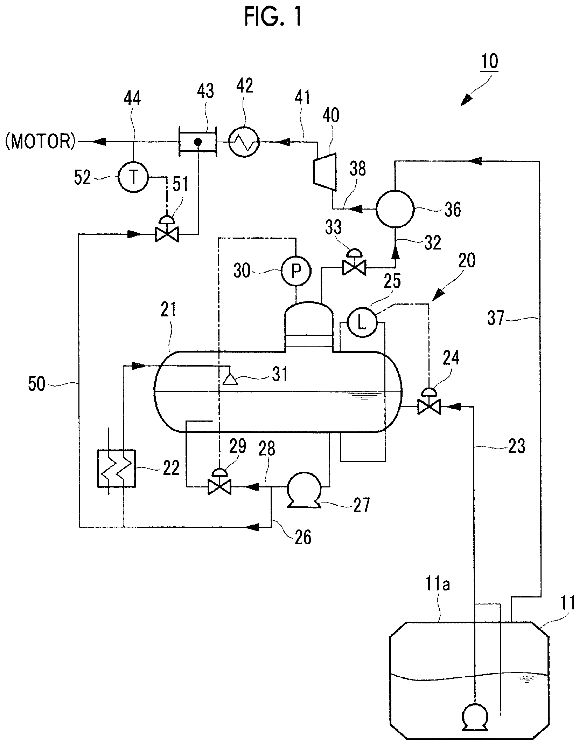

As shown in Fig. 1, a fuel gas supply system (natural gas fuel supply device) 10 is mounted on, for example, a ship to drive a turbine (motor or fuel supply target) of the ship. The fuel gas supply system 10 gasifies LNG in the liquid state (natural gas fuel (liquid)) supplied from outside and supplies the gas to a turbine or an engine which is a supply destination.

The fuel gas supply system 10 includes: a fuel tank 11 in which LNG is stored; and an evaporation device (natural gas fuel evaporator) 20 that evaporates LNG liquid pumped up from the fuel tank 11.

The fuel tank 11 may be a fuel tank in which LNG for fuel is stored, or may be a cargo tank of an LNG carrier ship in which LNG for cargo is stored. In this fuel tank 11, LNG is stored at, for example, -160°C.

The evaporation device 20 includes: a holding tank 21 in which LNG is held in a liquid state; and a heating unit 22 that extracts LNG from the holding tank 21 and heats LNG.

The holding tank 21 is preferably a horizontal type having a longer length in the horizontal direction than that in the vertical direction. The reason is to secure a wide evaporation area of the LNG liquid in the holding tank 21.

A supply pipe line 23 is connected to the holding tank 21 to supply LNG from the fuel tank 11 thereto. This supply pipe line 23 includes a flow rate adjusting valve (fuel level adjusting unit) 24. The opening degree of this flow rate adjusting valve 24 is adjusted by a controller (not shown) of the evaporation device 20 based on a detection signal of a level sensor 25 that detects the liquid level of the LNG liquid in the holding tank 21. As a result, the amount of the LNG liquid supplied from the fuel tank 11 can be controlled.

In addition, the holding tank 21 is provided with a circulation pipe line 26 that circulates the LNG liquid in the holding tank 21. The circulation pipe line 26 is provided with a pump 27 and a heating unit 22, in which the pump 27 extracts the LNG liquid from the holding tank 21 and causes the LNG liquid to flow along the circulation pipe line 26.

The heating unit 22 heats the LNG liquid in the circulation pipe line 26 through heat exchange with a heating medium supplied from outside.

The circulation pipe line 26 is provided with a spray nozzle (nozzle) 31 that sprays the LNG liquid heated by the heating unit 22 into the holding tank 21. Due to the pump 27, the LNG liquid is extracted from the holding tank 21 and is returned from the spray nozzle 31 to a top portion of the holding tank 21 through the circulation pipe line 26. As a result, the LNG liquid in the holding tank 21 is stirred.

The circulation pipe line 26 is provided with a bypass pipe line 28 that is branched on the upstream side of the heating unit 22, bypasses the heating unit 22, and returns to the holding tank 21. This bypass pipe line 28 is provided with a flow rate adjusting valve (flow rate adjusting unit) 29. The opening degree of the flow rate adjusting valve 29 is adjusted by the controller (not shown) of the evaporation device 20 based on a detection signal of a pressure sensor 30, which detects an internal pressure of the holding tank 21, such that the internal pressure of the holding tank 21 is maintained to be a saturated pressure of LNG. As a result, the flow rate of the bypass pipe line 28 can be controlled, that is, the flow rate of the LNG liquid discharged into the heating unit 22 can be controlled.

A gas discharge pipe (fuel supply line) 32 is connected to the top portion of the holding tank 21. The gas discharge pipe 32 is provided with a throttle valve (flow rate adjusting valve) 33, and the opening degree thereof is adjusted by the controller (not shown) of the evaporation device 20.

The evaporation device 20 pumps the LNG liquid up from the fuel tank 11 to the holding tank 21 through the supply pipe line 23 based on the detection signal of the level sensor 25. As a result, the level of the LNG liquid in the holding tank 21 is maintained at a predetermined level.

The pump 27 pumps a portion of the LNG liquid up from the holding tank 21 to the circulation pipe line 26.

The LNG liquid pumped up from the circulation pipe line 26 is heated by the heating unit 22. The heated LNG liquid is sprayed from the spray nozzle 31 into the holding tank 21.

In this way, the LNG liquid heated by the heating unit 22 is supplied into the holding tank 21. As a result, the LNG liquid in the holding tank 21 is saturated. At this time, the flow rate of the LNG liquid discharged into the heating unit 22 is adjusted based on the detection signal of the pressure sensor 30. As a result, the LNG liquid in the holding tank 21 is maintained at a saturated pressure.

When the throttle valve 33 is opened in this state, the internal pressure of the holding tank 21 is reduced. As a result, a methane component is evaporated from the LNG liquid so as to offset a decrease in pressure, and LNG gas (fuel gas (gas)) is obtained. At this time, since the holding tank 21 is a horizontal type, the liquid surface of the LNG liquid is wide, and the evaporation efficiency can be improved.

The evaporated LNG gas is discharged from the gas discharge pipe 32. The amount of the LNG gas discharged from the gas discharge pipe 32 is adjusted by the opening degree of the throttle valve 33.

The gas discharge pipe 32 is connected to a mixing chamber 36.

A direct supply pipe 37 is connected to the mixing chamber 36 so as to supply gas of LNG which is directly pumped up from a top portion 11a of the fuel tank 11.

A compressor 40 is connected to the mixing chamber 36 through a fuel gas supply pipe 38 so as to compress the LNG gas (methane gas). LNG gases are mixed with each other in the mixing chamber 36, and the mixed gas is discharged to the compressor 40 through the fuel gas supply pipe 38, one of the LNG gases being discharged from the holding tank 21 through the gas discharge pipe 32, and the other one of the LNG gases being discharged from the fuel tank 11 through the direct supply pipe 37.

In the compressor 40, the discharged LNG gas is compressed, and the LNG gas having a high temperature and a high pressure is discharged.

A gas heater 42 is connected to a discharge-side end of the compressor 40 through the fuel gas discharge pipe 41. This gas heater 42 is, for example, a shell-and-tube type in which the LNG gas is further heated through heat exchange with steam discharged from outside.

The fuel gas discharge pipe 41 is provided with the gas heater 42 and a desuperheater (gas temperature adjusting unit) 43 positioned on the downstream side of the gas heater 42.

The branch pipe 50, which is branched from the circulation pipe line 26 on the upstream side of the heating unit 22, is connected to the desuperheater 43. A portion of the LNG liquid is supplied from the holding tank 21 to the desuperheater 43 through the branch pipe 50 and is sprayed into the desuperheater 43. In the desuperheater 43, the LNG liquid having a low temperature, which is discharged from the holding tank 21 through the branch pipe 50, is sprayed onto the LNG gas having a high temperature and a high pressure which is discharged from the compressor 40 through the gas heater 42. As a result, the temperature of the LNG gas is adjusted.

Here, the branch pipe 50 is provided with a flow rate adjusting valve 51. A fuel gas discharge pipe 44, which discharges LNG gas from an exit side of the desuperheater 43 to a motor (not shown), is provided with a temperature sensor 52 which detects the temperature of the LNG gas. The opening degree of the flow rate adjusting valve 51 is adjusted by a controller (not shown) of the fuel gas supply system 10 based on the detection value of the temperature sensor 52 such that the temperature of the LNG gas on the exit side of the desuperheater 43 is in a predetermined range.

The LNG gas whose temperature is adjusted by the desuperheater 43 is supplied to the motor (not shown) such as a turbine or an engine through the fuel gas discharge pipe 44. The motor is driven using the discharged LNG gas as fuel.

According to the above-described configuration, the LNG liquid heated by the heating unit 22 is supplied to the holding tank 21, the LNG liquid is held in the holding tank 21 in a saturated state, and the throttle valve 33 is opened to reduce the internal pressure of the holding tank 21. As a result, the LNG liquid (methane component therein) can be evaporated from the holding tank 21 to obtain LNG gas, and the LNG gas can be discharged from the holding tank 21.

According to the above-described configuration, in the heating unit 22, LNG is heated in the liquid state, and hot water or steam on the heat source side is not in the gas-liquid two-phase state. Therefore, the heating unit 22 can be configured using a single-phase (liquid-liquid) heat exchanger. As a result, the design of the heating unit 22 can be made simple, and thus the cost can be reduced.

In addition, a portion of the LNG liquid in the holding tank 21 is supplied to the desuperheater 43 through the branch pipe 50. As a result, the accumulation of heavy components in the holding tank 21 can be avoided.

Due to the configuration capable of suppressing the accumulation of heavy components, the LNG gas having a low temperature, which is the boiling points of the heavy components or lower, can be discharged from the holding tank 21 to the compressor 40. As a result, a decrease in the compression efficiency of the compressor 40 can be suppressed, and the size of the compressor 40 can be decreased without being increased. As a result, the cost can be significantly reduced.

Further, the temperature of the LNG liquid in the holding tank 21 is increased by the heating unit 22 to be higher than that of the LNG liquid in the fuel tank 11 by, for example, about 10°C. Accordingly, in the LNG liquid discharged from the fuel tank 11 into the holding tank 21, methane is likely to be evaporated due to the LNG liquid having a high temperature in the holding tank 21 as a heating medium. As a result, the heating unit 22 has low heating capacity. From this point of view, the cost can be reduced.

In the above description, the fuel gas supply system 10 according to the embodiment is mounted on a ship to drive a turbine (motor) in the ship. However, in addition to the above-described use, the fuel gas supply system 10 can also be used, for example, for driving a turbine (motor) in power generation facilities or for driving an engine (motor) or the like in a vehicle.

In addition, in the above description, the LNG gas is used as the fuel gas to be supplied. However, the same configurations can be applied to, for example, LPG gas.

Further, in the above-described configuration, heavy components may be actively supplied from the fuel tank 11 to the holding tank 21. The heavy components in the holding tank 21 which are heated by the heating unit 22 may function as a heating medium when a methane component is evaporated.

### Reference Signs List

10: FUEL GAS SUPPLY SYSTEM (NATURAL GAS FUEL SUPPLY DEVICE)
11: FUEL TANK
11a: TOP PORTION
20: EVAPORATION DEVICE (NATURAL GAS FUEL EVAPORATOR)
21: HOLDING TANK
22: HEATING UNIT
23: SUPPLY PIPE LINE
24: FLOW RATE ADJUSTING VALVE (FUEL LEVEL ADJUSTING UNIT)
25: LEVEL SENSOR
26: CIRCULATION PIPE LINE
27: PUMP
28: BYPASS PIPE LINE
29: FLOW RATE ADJUSTING VALVE (FLOW RATE ADJUSTING UNIT)
30: PRESSURE SENSOR
31: SPRAY NOZZLE (NOZZLE)
32: GAS DISCHARGE PIPE (FUEL SUPPLY LINE)
33: THROTTLE VALVE (FLOW RATE ADJUSTING VALVE)
36: MIXING CHAMBER
37: DIRECT SUPPLY PIPE
38: FUEL GAS SUPPLY PIPE
40: COMPRESSOR
41: FUEL GAS DISCHARGE PIPE
42: GAS HEATER
43: DESUPERHEATER (GAS TEMPERATURE ADJUSTING UNIT)
44: FUEL GAS DISCHARGE PIPE
50: BRANCH PIPE
51: FLOW RATE ADJUSTING VALVE
52: TEMPERATURE SENSOR

## Claims

1. A natural gas fuel supply device (10) comprising:
a natural gas fuel evaporator (20) having:
a holding tank (21) arranged to hold therein natural gas fuel supplied from outside in a saturated liquid state;
a heating unit (22) arranged to heat the natural gas fuel extracted from the holding tank (21);
a nozzle (31) arranged to discharge the natural gas fuel heated by the heating unit (22) into the holding tank (21) ;
a fuel supply line (32) that is connected to the holding tank (21) to communicate with an external fuel supply target and arranged such that the natural gas fuel in a gas state can be discharged thereinto from the holding tank (21); and
a flow rate adjusting valve (33) that is provided in the fuel supply line (32); and
a compressor (40) arranged to compress the natural gas fuel in the gas state discharged from the holding tank (21) through the fuel supply line (32); and
a gas temperature adjusting unit (43) provided downstream of a discharge-side end of the compressor (40) for adjusting the temperature of the natural gas fuel;
**characterized in that**
the gas temperature adjusting unit (43) is arranged to adjust the temperature of the natural gas fuel by spraying the natural gas fuel in the liquid state extracted from the holding tank (21) onto the natural gas fuel compressed by the compressor (40).

2. The natural gas fuel supply device (10) according to claim 1, comprising:
a fuel tank (11) in which the natural gas fuel to be supplied to the holding tank (21) can be stored.

3. The natural gas fuel supply device (10) according to claim 2, further comprising:
a level sensor (25) that is arranged to detect a liquid level of the natural gas fuel in the holding tank (21); and
a fuel level adjusting unit (24) that is arranged to adjust an amount of the natural gas fuel supplied from the fuel tank (11) to the holding tank (21) based on the detection data of the level sensor (25) such that the liquid level of the natural gas fuel in the holding tank (21) is maintained to be constant.

4. The natural gas fuel supply device (10) according to any one of claims 1 to 3, further comprising:
a temperature sensor (52) that is provided on an exit side of the gas temperature adjusting unit (43) for detecting the temperature of the natural gas fuel discharged from the gas temperature adjusting unit (43); and
a flow rate adjusting valve (51) that is arranged to adjust a flow rate of the natural gas fuel in the liquid state supplied from the holding tank (21) to the gas temperature adjusting unit (43) based on the detection data of the temperature sensor (52).

5. The natural gas fuel supply device (10) according to any one of claims 1 to 4, further comprising:
a pressure sensor (30) that is arranged to detect an internal pressure of the holding tank (21); and
a flow rate adjusting unit (29) that is arranged to adjust a flow rate of the natural gas fuel supplied to the heating unit (22) based on detection data of the pressure sensor (30) such that the internal pressure of the holding tank (21) is a saturated pressure of the natural gas fuel.

6. A ship comprising:
the natural gas fuel supply device (10) according to any one of claims 1 to 5; and
a motor to which the natural gas fuel compressed by the compressor (40) is to be supplied as fuel through the fuel supply line (32).

7. A method for supplying natural gas fuel to a motor, the method comprising:
a step of extracting natural gas fuel from a holding tank (21) in which the natural gas fuel supplied from outside is held in a saturated liquid state, heating the natural gas fuel, and discharging the heated natural gas fuel into the holding tank (21);
a step of evaporating the natural gas fuel in the liquid state held in the holding tank (21) by opening a flow rate adjusting valve (33), which is provided in a fuel supply line (32), to reduce an internal pressure of the holding tank (21), the fuel supply line (32) being connected to the holding tank (21) to communicate with an external fuel supply target;
a step of discharging the evaporated natural gas fuel to a compressor (40) through the fuel supply line (32) and compressing the natural gas fuel using the compressor (40);
a step of adjusting the temperature of the natural gas fuel by spraying the natural gas fuel in the liquid state extracted from the holding tank (21) onto the natural gas fuel compressed by the compressor (40); and
a step of supplying the compressed natural gas fuel whose temperature has been adjusted to a motor.

## Patentansprüche

1. Eine Erdgasbrennstoffzuführvorrichtung (10) mit:
einem Erdgasbrennstoffverdampfer (20) mit:
einem Speichertank (21), der angeordnet ist, um darin einen von außen zugeführten Erdgasbrennstoff in einem gesättigten flüssigen Zustand zu halten,
einer Heizeinheit (22), die angeordnet ist, um den Erdgasbrennstoff, der von dem Speichertank (21) extrahiert wird, zu erwärmen,
einer Düse (31), die angeordnet ist, um den durch die Heizeinheit (22) erwärmten Erdgasbrennstoff in den Speichertank (21) auszutragen,
einer Brennstoffzuführleitung (32), die mit dem Speichertank (21) verbunden ist, um eine Verbindung mit einem externen Brennstoffzuführziel herzustellen und die so angeordnet ist, dass der Erdgasbrennstoff in einem gasförmigen Zustand in diese von dem Speichertank (21) ausgetragen werden kann, und
einem Strömungsraten-Einstellventil (33), das in der Brennstoffzuführleitung (32) vorgesehen ist, und
einem Kompressor (40) der angeordnet ist, um den Erdgasbrennstoff in dem gasförmigen Zustand, der von dem Speichertank (21) durch die Brennstoffzuführleitung (32) ausgetragen wird, zu komprimieren, und
einer Gastemperatur-Einstelleinheit (43), die stromab eines austragsseitigen Endes des Kompressors (40) zum Einstellen der Temperatur des Erdgasbrennstoffs vorgesehen ist,
**dadurch gekennzeichnet, dass**
die Gastemperatur-Einstelleinheit (43) angeordnet ist, um die Temperatur des Erdgasbrennstoffs durch Sprühen des Erdgasbrennstoffs in einem flüssigen Zustand, der von dem Speichertank (21) extrahiert wurde, auf den durch den Kompressor (40) komprimierten Erdgasbrennstoff einzustellen.

2. Die Erdgasbrennstoffzuführvorrichtung (10) gemäß Anspruch 1, mit:
einem Brennstofftank (11), in dem der dem Speichertank (21) zuzuführende Erdgasbrennstoff gespeichert werden kann.

3. Die Erdgasbrennstoffzuführvorrichtung (10) gemäß Anspruch 2, ferner mit:
einem Niveausensor (25), der angeordnet ist, um ein Flüssigkeitsniveau des Erdgasbrennstoffs in dem Speichertank (21) zu erfassen, und
einer Brennstoffniveau-Einstelleinheit (24), die angeordnet ist, um eine Menge des von dem Brennstofftank (11) zu dem Speichertank (21) zugeführten Erdgasbrennstoffs basierend auf den Erfassungsdaten des Niveausensors (25) so einzustellen, dass das Flüssigkeitsniveau des Erdgasbrennstoffs in dem Speichertank (21) konstant gehalten wird.

4. Die Erdgasbrennstoffzuführvorrichtung (10) gemäß einem der Ansprüche 1 bis 3, ferner mit:
einem Temperatursensor (52), der an einer Austrittsseite der Gastemperatur-Einstelleinheit (43) vorgesehen ist, zum Erfassen der Temperatur des von der Gastemperatur-Einstelleinheit (43) ausgetragenen Erdgasbrennstoffs, und
einem Strömungsraten-Einstellventil (51), das angeordnet ist, um eine Strömungsrate des Erdgasbrennstoffs in dem flüssigen Zustand, der von dem Speichertank (21) zugeführt wird, zu der Gastemperatur-Einstelleinheit (43) auf Basis der Erfassungsdaten des Temperatursensors (52) einzustellen.

5. Die Erdgasbrennstoffzuführvorrichtung (10) gemäß einem der Ansprüche 1 bis 4, ferner mit:
einem Drucksensor (30) der angeordnet ist, um einen Innendruck des Speichertanks (21) zu erfassen, und
einer Strömungsraten-Einstelleinheit (29) die angeordnet ist, um eine Strömungsrate des Erdgasbrennstoffs, der der Heizeinheit (22) zugeführt wird, auf Basis von Erfassungsdaten des Drucksensors (30) so einzustellen, dass der Innendruck des Speichertanks (21) ein gesättigter Druck des Erdgasbrennstoffs ist.

6. Ein Schiff mit:
der Erdgasbrennstoffzuführvorrichtung (10) gemäß einem der Ansprüche 1 bis 5, und
einem Motor, dem der durch den Kompressor (40) komprimierte Erdgasbrennstoff als Brennstoff durch die Brennstoffzuführleitung (32) zuzuführen ist.

7. Ein Verfahren zum Zuführen von Erdgasbrennstoff zu einem Motor, wobei das Verfahren aufweist:
einen Schritt des Extrahierens von Erdgasbrennstoff aus einem Speichertank (21), in dem der von einer Außenseite zugeführte Erdgasbrennstoff in einem gesättigten flüssigen Zustand gehalten ist, des Erwärmens des Erdgasbrennstoffs, und des Austragens des erwärmten Erdgasbrennstoffs in den Speichertank (21),
einen Schritt des Verdampfens des Erdgasbrennstoffs in dem flüssigen Zustand, der im dem Speichertank (21) gehalten ist, durch Öffnen eines Strömungsraten-Einstellventils (33), dass in einer Brennstoffzuführleitung (32) vorgesehen ist, um einen Innendruck des Speichertanks (21) zu verringern, wobei die Brennstoffzuführleitung (32) mit dem Speichertank (21) verbunden ist, um eine Verbindung mit einem externen Brennstoffzuführziel herzustellen,
einen Schritt des Austragens des verdampften Erdgasbrennstoffs zu einem Kompressor (40) durch die Brennstoffzuführleitung (32) und des Komprimierens des Erdgasbrennstoffs unter Verwendung des Kompressors (40),
einen Schritt des Einstellens der Temperatur des Erdgasbrennstoffs durch Sprühen des Erdgasbrennstoffs in dem flüssigen Zustand, der von dem Speichertank (21) extrahiert wurde, auf den durch den Kompressor (40) komprimierten Erdgasbrennstoff, und
einen Schritt des Zuführens des komprimierten Erdgasbrennstoffs, dessen Temperatur eingestellt wurde, zu einem Motor.

## Revendications

1. Dispositif (10) d'alimentation en carburant au gaz naturel, comprenant :
un évaporateur (20) de carburant au gaz naturel ayant :
un réservoir (21) agencé pour qu'il soit contenu du carburant au gaz naturel fourni de l'extérieur à l'état d'un liquide saturé ;
une unité (22) de chauffage agencée pour chauffer le carburant au gaz naturel extrait du réservoir (21) ;
une buse (31) agencée pour décharger le carburant au gaz naturel chauffé par l'unité (22) de chauffage dans le réservoir (21) ;
un conduit (32) d'alimentation en carburant, qui est relié au réservoir (21) afin de communiquer avec une cible extérieure d'alimentation en carburant et agencé de manière à ce que le carburant au gaz naturel à l'état gazeux puisse y être déchargé à partir du réservoir (21) et
une vanne (33) du réglage du débit, qui est prévue dans le conduit (32) d'alimentation en carburant et
un compresseur (40) agencé pour comprimé le carburant au gaz naturel à l'état gazeux déchargé du réservoir (21) par l'intermédiaire du conduit (32) d'alimentation en carburant et
une unité (43) de réglage de la température du gaz prévue en aval de l'extrémité du côté refoulement du compresseur (40) pour régler la température du carburant au gaz naturel ;
**caractérisé en ce que**
l'unité (43) de réglage de la température du gaz est agencée pour régler la température du carburant au gaz naturel en pulvérisant le carburant au gaz naturel à l'état liquide extrait du réservoir (21) sur le carburant au gaz naturel comprimé par le compresseur (40).

2. Dispositif (10) d'alimentation en carburant au gaz naturel suivant la revendication 1, comprenant :
une cuve (11) de carburant dans laquelle le carburant au gaz naturel à envoyer au réservoir (21) peut être stocké.

3. Dispositif (10) d'alimentation en carburant au gaz naturel suivant la revendication 2, comprenant en outre :
un capteur (25) de niveau agencé pour détecter un niveau de liquide du carburant au gaz naturel dans le réservoir (21) et
une unité (24) de réglage du niveau du carburant agencé pour régler une quantité du carburant au gaz naturel fournie par la cuve (11) de carburant au réservoir (21), sur la base de la donnée de détection du capteur (25) de niveau, de manière à maintenir constant le niveau de carburant au gaz naturel dans le réservoir (21).

4. Dispositif (10) d'alimentation en carburant au gaz naturel suivant l'une quelconque des revendications 1 à 3, comprenant en outre :
une sonde (52) de température prévue sur un côté de sortie de l'unité (43) de réglage de la température du gaz pour détecter la température du carburant au gaz naturel déchargé de l'unité (43) de réglage de la température et
une vanne (51) de réglage du débit agencée pour régler un débit du carburant au gaz naturel à l'état liquide fourni du réservoir (21) à l'unité (43) de réglage de la température, sur la base de la donnée de détection de la sonde (52) de température.

5. Dispositif (10) d'alimentation en carburant au gaz naturel suivant l'une quelconque des revendications 1 à 4, comprenant en outre :
un capteur (30) de pression agencé pour détecter une pression à l'intérieur du réservoir (21) et
une unité (29) de réglage du débit agencée pour régler un débit du carburant au gaz naturel fourni à l'unité (22) de chauffage, sur la base d'une donnée de détection du capteur (30) de pression, de manière à ce que la pression à l'intérieur du réservoir (21) soit une pression de saturation du carburant au gaz naturel.

6. Bateau comprenant :
le dispositif (10) d'alimentation au carburant au gaz naturel suivant l'une quelconque des revendications 1 à 5 et
un moteur auquel le carburant au gaz naturel comprimé par le compresseur (40) doit être envoyé comme carburant par l'intermédiaire du conduit (32) d'alimentation en carburant.

7. Procédé d'alimentation d'un moteur en carburant au gaz naturel, le procédé comprenant :
un stade d'extraction de carburant au gaz naturel d'un réservoir (21) dans lequel le carburant au gaz naturel fourni de l'extérieur est maintenu dans un état liquide saturé, de chauffage du carburant au gaz naturel et de déchargement du carburant au gaz naturel chauffé dans le réservoir (21) ;
un stade d'évaporation du carburant au gaz naturel à l'état liquide maintenu dans le réservoir (21) en ouvrant une vanne (33) de réglage du débit, qui est prévue dans un conduit (32) d'alimentation en carburant, pour réduire une pression à l'intérieur du réservoir (21), le conduit (32) d'alimentation en carburant étant relié au réservoir (21) pour communiquer avec une cible extérieure d'alimentation en carburant ;
un stade de déchargement du carburant au gaz naturel évaporé ver un compresseur (40) par l'intermédiaire du conduit (32) d'alimentation en carburant et de compression du carburant au gaz naturel en utilisant le compresseur (40) ;
un stade de réglage de la température du carburant au gaz naturel en pulvérisant le carburant au gaz naturel à l'état liquide extrait du réservoir (21) sur le carburant au gaz naturel comprimé par le compresseur (40) et
un stade d'alimentation d'un moteur en le combustible au gaz naturel comprimé, dont la température a été réglée.
